# EUROPEAN PATENT APPLICATION

(11) **EP 1 147 883 A2**
(43) Date of publication of application: **24.10.2001**
(21) Application number: 01109038.8
(22) Date of filing: 11.04.2001
(51) Int. Cl.: B32B 31/00, B29C 43/24

(54) **Calender rollers and method for producing laminated sheet**

(30) Priority: 21.04.2000 JP 2000120322; 16.10.2000 JP 2000314629
(71) Applicant: NITTO DENKO CORPORATION, Osaka (JP)
(72) Inventor: Hirose, Isao, Ibaraki-shi, Osaka (JP); Yamaguchi, Tomoo, Ibaraki-shi, Osaka (JP); Ina, Yasunobu, Ibaraki-shi, Osaka (JP); Fujiwara, Shuzo, Ibaraki-shi, Osaka (JP); Kaita, Kunihiko, Ibaraki-shi, Osaka (JP)
(74) Representative: Grünecker, Kinkeldey, Stockmair & Schwanhäusser Anwaltssozietät

(57) **Abstract**

A set of calender rollers (C) is described, which comprises at least three rollers, for rolling a plastic material into a plastic material sheet (M) and for laminating the plastic material sheet (M) onto a base material sheet (31) at a nip portion (P) to be formed into a laminated plastic material sheet (33), wherein
the nip portion (P) is formed with a pair of nip rollers including a holding roller (3) for holding the rolled plastic material sheet (M), and behind the nip portion, a release member (41) for releasing the laminated plastic material sheet from the holding roller (3) is arranged in proximity to or in contact with the holding roller.

## Description

### FIELD OF THE INVENTION

The present invention relates to a laminated sheet provided with improved precision in surface roughness. More particularly, the present invention relates to a set of calender rollers that are suitable for producing a pressure-sensitive adhesive sheet and to a method for producing a laminated sheet employing the set of calender rollers.

### BACKGROUND OF THE INVENTION

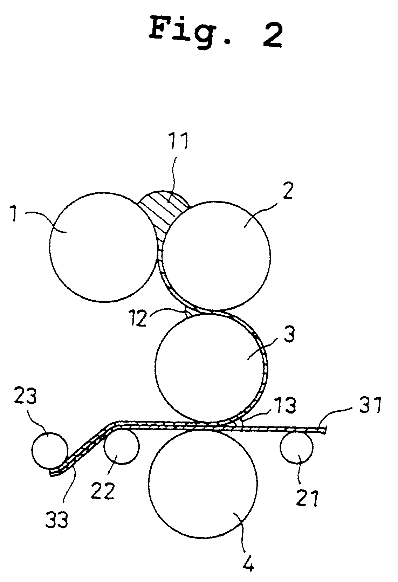

Fig. 2 is a view illustrating the structure of a set of conventional calender rollers and a method for producing a laminated sheet of a plastic material sheet and base material sheet using the set of calender rollers, taking the set of four inverted-L calender rollers as an example.

A plastic material or a coating liquid loaded between a side roller 1 and a top roller 2 forms a first bank 11, and is then rolled with the side roller 1 and the top roller 2 to pass over the top roller 2. Then, the plastic material is further rolled in between the top roller 2 and a center roller 3 to form into a second bank 12 between these rollers at this time. After the plastic material has been rolled between the top roller 2 and the center roller 3, the plastic material sheet passing over the center roller 3 forms a third bank 13 between the center roller 3 and a bottom roller 4.

On the other hand, the base material sheet 31 is dispensed from a dispenser roller 21 to pass through between the center roller 3 and the bottom roller 4. At this time, the plastic material is applied and laminated on the base material sheet 31 to form into a laminated sheet 33 at the third bank and at the nip portion between the center roller 3 and the bottom roller 4. After having been wound by a roller 22 and released from the roller, the laminated sheet 33 is wound around roller 23 in a manner such that the non-laminated surface of the plastic material sheet is in contact with the rear surface of the base material sheet 31.

In the aforementioned known prior art, the base material sheet 31 passes through the nip between the center roller 3 and bottom roller 4 to form into a laminated sheet, and thereafter the laminated sheet 33 is released from the center roller 3 with the winding roller 22. The layer of the plastic material is not only strongly adhered to and laminated on the base material sheet 31 but also stuck on the center roller 3. For this reason, the surface of the plastic material layer is released between the center roller 3 and the laminated sheet 33 , so that the surface of the plastic material layer of the laminated sheet 33 becomes uneven with greater projections and depressions. After having been wound around the roller 23, the plastic material layer gradually become identical in roughness of the surface to the surface of the base material sheet, but will never become the same as the base material sheet, allowing the projections and depressions to remain to some extent.

The projections and depressions remaining on the pressure-sensitive adhesive material surface causes the following problems:
(1) Defective outer appearance of the product itself,
(2) Degradation in transparency of the product employing a transparent base material sheet, and
(3) Defective adhesion caused by a reduction in adhesive area at the time of service.

### SUMMARY OF THE INVENTION

The object of the invention is to provide a laminated sheet having a surface with less projections and depressions, and thus with reduced roughness and improved smoothness. Another object of the present invention is to provide a set of calender rollers suitable for producing a pressure-sensitive adhesive sheet. Still another object is to provide a method for producing a laminated sheet employing the set of calender rollers.

The objects of the invention have been achieved by the following invention.
(1) A set of calender rollers comprising at least three rollers , for rolling a plastic material into a plastic material sheet and for laminating the plastic material sheet onto abasematerial sheet at a nip portion to be formed into a laminated plastic material sheet, wherein the nip portion is formed with a pair of nip rollers including a holding roller for holding the rolled plastic material sheet, and behind the nip portion, a release member for releasing the laminated plastic material sheet from the holding roller is arranged in proximity to or in contact with the holding roller.
(2) A method for producing a laminated sheet by laminating a plastic material sheet on a base material sheet using a set of calender rollers, wherein
   the set of calender rollers comprises at least three rollers , a nip portion is formed with a pair of nip rollers including a holding roller for holding a rolled plastic material sheet, and behind the nip portion, a release member is arranged in proximity to or in contact with the holding roller, and
   a plastic material is rolled into the plastic material sheet, then the plastic material sheet is laminated onto a base material sheet at the nip portion, and thereafter a plastic material sheet layer of the laminated sheet is released from the holding roller with the release member.

### BRIEF DESCRIPTION OF THE DRAWINGS

Fig. 1 is a view illustrating calender rollers provided with a doctor knife disposed behind a nip portion of a center roller (holding roller) for holding a plastic material sheet.
Fig. 2 is a view illustrating the steps of producing a conventional laminated sheet.

### Explanation of symbols

- C: Four inverted-L calender rollers
- M: Plastic material sheet
- 31: Base material sheet
- 33: Laminated sheet
- 41: Doctor knife

### DETAILED DESCRIPTION OF THE INVENTION

The laminated sheet formed after having passed through the nip portion remains held on the holding roller due to the tackiness between the plastic material sheet and the holding roller. Then, the laminated sheet is released from the calender rollers by the releasing effect of the release member without projections and depressions being produced on the surface thereof, thus forming into a laminated sheet having a very smooth surface.

The release member prevents the plastic material stuck to the holding roller from being elongated due to the tackiness, when released from the holding roller, to generate no residual strain along therewith. As the release member, available is a hot air blower for supplying heated air, a small diameter roller, or a scraper. More particularly, a doctor knife is preferably employed in the set of calender rollers according to the present invention.

It is determined in consideration of the type, feature or the like of the release member whether the release member is brought into contact with the holding roller . A release member may be used in contact with or being spaced apart from the holding roller. It is preferable to install the small diameter roller or the like being spaced a little apart from the holding roller, whereas the doctor knife or the like is preferably installed in contact with the holding roller. The doctor knife releases the plastic material sheet from the surface of the holding roller as if scraping from the sheet.

The aforementioned set of calender rollers is preferably adapted such that the release member can be heated. The temperature for heating the release member is determined to be appropriate according to the type thereof or the type of the plastic material to be used, however, preferably 50 to 250°C. The doctor knife is preferably heated at 100 to 200°C. Such a problem would be presented that heating to an excessively low temperature provides no effect for the heating but heating to an excessively high temperature would cause the plastic material in contact with the release member to decompose.

Heating the release member will make the surface of the plasticmaterial sheet of the resulting laminated sheet smoother .

It is preferable to vibrate the doctor knife used as the release member because this provides a laminated sheet having a smoother surface. The doctor knife is preferably vibrated at a frequency of 0.01Hz to 30kHz. It is more preferable that the frequency ranges from 0.1 to 1Hz or 20kHz to 30kHz for providing ultrasonic vibration. The vibration may be produced in the direction of length and/or width of the doctor knife . For example , the amplitude may preferably range from 2 to 20mm for vibration at a frequency of 0.1 to 1Hz and from 1 to 5µm for vibration at a frequency of 20kHz to 30kHz. As a vibration means, a known vibration loading means is available. For example, an air cylinder or the like is preferably used for vibration at a frequency of 0.1 to 1Hz, while an ultrasonic vibrator is more preferably used for vibration at a frequency of 20kHz to 30kHz.

The present invention also provides a method for producing a laminated sheet by laminating a plastic material sheet on a base material sheet using a set of calender rollers . The method is characterized in that the set of calender rollers comprises at least three rollers, a nip portion is formed with a pair of nip rollers including a holding roller for holding a rolled plastic material sheet. Herein, behind the nip portion, a release member is arranged in proximity to or in contact with the holding roller. The method is also characterized in that a plastic material is rolled into the plastic material sheet, then the plastic material sheet is laminated onto a base material sheet at the nip portion. Thereafter, a plastic material sheet layer of the laminated sheet is released from the holding roller with the release member.

As described above, a doctor knife is used as the release member and preferably vibrated.

The plastic material sheet and the base material sheet are laminated onto each other at the nip portion. Thereafter, the releasing effect of the release member allows the laminated sheet to be released from the calender rollers without causing any projections and depressions on the surface thereof. Thus, a laminated sheet with a smoother surface is produced.

Because of the aforementioned reason, the release member is preferably heated at 50°C or more. In addition, it is more preferable to use a doctor knife as the release member.

The plastic material employed by the present invention has tackiness in the laminating process using the calender rollers. It is out of the question whether the plastic material still has tackiness after having been laminated or cooled down. Nevertheless, it is preferable that the plastic material is a pressure-sensitive adhesive and the laminated sheet is a pressure-sensitive adhesive sheet.

The pressure-sensitive adhesive used for the pressure-sensitive adhesive sheet can be used without limitation so long as it can be calendered, but is preferably a rubber-based pressure-sensitive adhesive. The rubber-based pressure-sensitive adhesive is best calendered. On the other hand, the rubber-based pressure-sensitive adhesive has strong tackiness and therefore can easily make the tackiness surface thereof rougher when released from the calendar rollers. Accordingly, the present invention can provide a pressure-sensitive adhesive sheet with a smoother tackiness surface.

The embodiments of the present invention will be explained below with reference to the accompanying drawings.

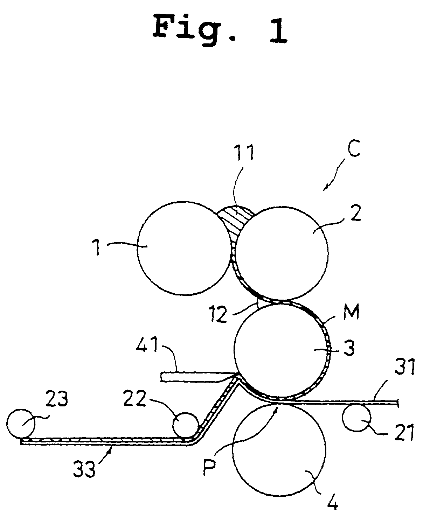

Fig. 1 is a view illustrating a preferred embodiment of a set of calender rollers according to the present invention. The example shown in the figure is a set of four inverted-L calender rollers with a doctor knife being employed as a release member. The set of four inverted-L calender rollers C comprises the side roller 1, the top roller 2, the center roller 3, and the bottom roller 4 to hold a sheeted plastic material M around the center roller 3. Accordingly, in this example, the center roller 3 serves as a holding roller. In addition, the center roller 3 and the bottom roller 4 constitute nip rollers having a nip portion P.

Behind the nip portion P of the center roller 3 or the holding roller and in front of the secondbank 12 , there is provided a doctor knife 41 in proximity to or in contact with the center roller 3. The doctor knife 41 is usually installed in contact with the holding roller 3.

The doctor knife 41 is made of a known material used for coating, for example, a material including metal such as iron and stainless steel or hard resin . When iron is used, the doctor knife 41 is preferably coated with a protective layer such as by hard chromium plating.

Now, a method for producing a laminated sheet using the calender roller machine C shown in Fig. 1 will be explained below. A plastic material loaded between the side roller 1 and the top roller 2 forms the first bank 11, and is then rolled to pass over the top roller 2. Then, the sheeted plastic material is further rolled in between the top roller 2 and the center roller 3 and forms the second bank 12 therebetween at this time. The plastic material sheet M, which has been thus rolled in between the top roller 2 and the center roller 3 and stuck to and held on the center roller 3, is wound by in the form of a sheet and thus held on the center roller 3 or a holding roller, and then fed to the nip portion P.

On the other hand, the base material sheet 31 is rewound off a source sheet (not shown) to be dispensed from the dispenser roller 21. Then, the base material sheet 31 is fed to the nip portion P to be pressed and laminated onto the plastic material sheet M to form into the laminated sheet 33. The pressed laminated sheet 33 is transported while attached to the center roller 3 by the tackiness between the surface of the plastic material sheet and the center roller 3. Then, behind the nip portion P, the laminated sheet 33 is released with the doctor knife 41 installed in front of the second bank 12, while being subjected to a releasing force provided by the non-tacky roller 22 or the like. Then, the laminated sheet 33 passes over the non-tacky roller 22 to be wound around the laminated-sheet winding roller 23.

This example shows a set of four inverted-L calender rollers provided with the doctor knife 41 as an example of a release member. However, the identical release member can be applied to known calender rollers such as a set of three inverted-L calender rollers , a set of three to four Z-shaped calender rollers , a set of six calender rollers.

It is also preferable to perform low tackiness treatment on the surface of the doctor knife 41. More specifically, the preferred low tackiness treatment includes poly-fluorinated ethylene coating, and nickel/poly-fluorinated ethylene coating and plating. The doctor knife can be heated, for example, with an electric heater provided inside the doctor knife or by means of a heating medium passing through a heating medium circulating path.

As for crude rubber used for rubber-based pressure-sensitive adhesive, any type of rubber can be employed as pressure-sensitive adhesive without limitation. More specifically, the crude rubber includes natural rubber and synthetic rubber such as polyisoprene rubber, polybutadiene rubber, styrene-butadiene rubber, butyl rubber, and ethylene-propylene rubber. However, natural rubber provides strong tackiness and thus is most preferably used.

These types of crude rubber are doped with a known additive to form into a rubber-based pressure-sensitive adhesive. Additives are selected as appropriate according to their application and include inorganic materials such as silica, alumina, titanium oxide, and calcium carbonate; colorant such as pigment; antioxidants; and tackifiers.

As the base material sheet, known base material sheets can be used without limitation. More specifically, the base material sheet includes paper such as kraft paper; thermoplastic resin film such as polyethylene terephthalate (PET) film, oriented polypropylene (OPP) film, polyamide film, and polyaramide film; and non-woven fabric.

Now, the present invention is explained more specifically with reference to Examples. However, the present invention is not limited the following Examples.

### EXMAPLE 1

An amount of natural rubber was subjected to mastication with a mixing roller to provide masticated rubber having a Mooney viscosity ML₁₊₄ (100°C) of 60. 1500g of rubber was put into a 5-liter pressure kneader heated at 120°C. Then, 750g of calcium carbonate power and 30g of phenolic antioxidant were put into the kneader at the same time and mixed with one another for five minutes. Thereafter, 1350g of petroleum resin tackifier was also added and mixed for 20 minutes. Subsequently, the mixture was taken out of the kneader to obtain a pressure-sensitive adhesive composition.

The mixture was inputted into a set of four inverted-L calender rollers (each roller having a diameter of 254mm) to pass through the pass line shown in Fig. 1 and was thus subjected to coating and lamination at a line speed of 5m/min. An OPP sheet of thickness 50µm was employed as the base material sheet 31.

### EXAMPLE 2

A laminated sheet was prepared in the same manner as in Example 1 except that the doctor knife was provided with a band heater and a temperature sensor and heated at 150°C.

### EXAMPLE 3

A laminated sheet was prepared in the same manner as in Example 1 except that the doctor knife was provided with an air cylinder so as to be vibrated in the direction of the width of the sheet and was vibrated to be used at a frequency of 0.5Hz.

### COMPARATIVE EXAMPLE 1

Coating was applied to a sheet at a line speed of 5m/min in the same manner as Example 1 except that the conventional pass line shown in Fig. 2 was used.

Immediately after having been wound, the samples provided by the aforementioned Examples 1 to 3 and Comparative Example 1 were subjected to measurements of the roughness of coated surfaces. A surface profile measuring apparatus P-11 (made by Tencole) was used for the measurement to find an average roughness Ra (µm) as determined in accordance with JIS-B0601-1994 and an average height RMS (µm). The obtained results are shown in Table 1.

**TABLE 1**

| | Average roughness (Ra) | Average height (RMS) |
|---|---|---|
| EXAMPLE 1 | 0.243 | 0.588 |
| EXAMPLE 2 | 0.201 | 0.523 |
| EXAMPLE 3 | 0.225 | 0.541 |
| COMPARATIVE EXAMPLE 1 | 12.71 | 20.35 |

As described above, behind the nip portion of the plastic material sheet holding roller, a doctor knife is provided to release a plastic material sheet in such a manner that the surface of a plastic material sheet of the laminated sheet is scraped from the holding roller. This makes it possible to reduce the roughness of the plastic material layer, thereby providing the laminated sheet with an improved outer appearance and improved product properties. The doctor knife was heated and found effective at improving surface smoothness.

While the invention has been described in detail and with reference to specific embodiments thereof, it will be apparent to one skilled in the art that various changes and modifications can be made therein without departing from the spirit and scope thereof.

## Claims

1. A set of calender rollers comprising at least three rollers , for rolling a plastic material into a plastic material sheet and for laminating said plastic material sheet onto a base material sheet at a nip portion to be formed into a laminated plastic material sheet, wherein
said nip portion is formed with a pair of nip rollers including a holding roller for holding said rolled plastic material sheet, and behind said nip portion, a release member for releasing said laminated plastic material sheet from said holding roller is arranged in proximity to or in contact with said holding roller.

2. The set of calender rollers according to Claim 1, wherein said release member is able to be heated.

3. The set of calender rollers according to Claim 1, wherein said release member is a doctor knife.

4. The set of calender rollers according to Claim 3, wherein said doctor knife is able to be vibrated.

5. A method for producing a laminated sheet by laminating a plastic material sheet on a base material sheet using a set of calender rollers, wherein
said set of calender rollers comprises at least three rollers, a nip portion is formed with a pair of nip rollers including a holding roller for holding a rolled plastic material sheet, and behind said nip portion, a release member is arranged in proximity to or in contact with said holding roller, and
a plastic material is rolled into said plastic material sheet, then said plastic material sheet is laminated onto a base material sheet at said nip portion, and thereafter a plastic material sheet layer of said laminated sheet is released from said holding roller with said release member.

6. The method for producing a laminated sheet according to Claim 5, wherein said release member is heated at 50°C or more.

7. The method for producing a laminated sheet according to Claim 5, wherein said release member is a doctor knife.

8. The method for producing a laminated sheet according to Claim 7, wherein said doctor knife is vibrated.

9. The method for producing a laminated sheet according to any one of Claims 5, wherein said plastic material is a pressure-sensitive adhesive and said laminated sheet is a pressure-sensitive adhesive sheet.

10. The method for producing a laminated sheet according to Claim 9, wherein said pressure-sensitive adhesive is a rubber-based pressure-sensitive adhesive.
